# EUROPEAN PATENT APPLICATION

(11) **EP 4 135 276 A1**
(43) Date of publication of application: **15.02.2023**
(21) Application number: 21800709.4
(22) Date of filing: 06.05.2021
(51) Int. Cl.: H04L 12/725

(54) **MESSAGE TRANSMISSION METHOD AND FRAME-TYPE COMMUNICATION DEVICE**

(30) Priority: 06.05.2020 CN 202010371228
(71) Applicant: Huawei Technologies Co., Ltd., Longgang District, Shenzhen, Guangdong 518129 (CN)
(72) Inventor: WANG, Jianbing, Shenzhen, Guangdong 518129 (CN); QIN, Xiaopeng, Shenzhen, Guangdong 518129 (CN); DING, Jun, Shenzhen, Guangdong 518129 (CN)
(74) Representative: Gill Jennings & Every LLP
(86) International application number: PCT/CN2021/091911
(87) International publication number: WO 2021/223710

(57) **Abstract**

A packet transmission method and a frame-shaped communication device are disclosed. The packet transmission method is applied to the frame-shaped communication device. The frame-shaped communication device includes a first MPU, a second MPU, and an LPU. The first MPU is connected to the LPU through a first transmission channel. The second MPU is connected to the LPU through a second transmission channel. During packet transmission, a service flow packet is transmitted through the first transmission channel, and a non-service flow packet is transmitted through the second transmission channel. Therefore, the service flow packet and the non-service flow packet are transmitted through different transmission channels, and are processed by different MPUs, so that the service flow packet and the non-service flow packet do not compete with each other. In this way, transmission efficiency of the non-service flow packet is improved. In addition, when the first MPU is attacked by an abnormal service flow packet, the second MPU is not affected, and may normally perform operation and maintenance management.

## Description

This application claims priority to Chinese Patent Application No. 202010371228.7, filed on May 6, 2020 and entitled "PACKET TRANSMISSION METHOD AND FRAME-SHAPED COMMUNICATION DEVICE", which is incorporated herein by reference in its entirety.

### TECHNICAL FIELD

This application relates to the field of communication technologies, and in particular, to a packet transmission method and a frame-shaped communication device.

### BACKGROUND

A frame-shaped communication device, for example, a modular switch, generally includes a main processing unit (main processing unit, MPU) and a line processing unit (line processing unit, LPU). The MPU and LPU are connected through a transmission channel. In addition, to improve service reliability, a primary MPU and a secondary MPU are generally disposed in a switch. Normally, all services of the device are run on the primary MPU. Once the primary MPU is faulty, primary/secondary switchover is performed, and the secondary MPU is upgraded to the primary MPU to continue to run the services, so that the services are not interrupted, to improve service reliability.

In a process of implementing this application, the applicant finds that a related technology has at least the following problems: When a frame-shaped communication device transmits a packet, the packet includes a service flow packet and a non-service flow packet. The non-service flow packet includes an operation and maintenance task type packet, a configuration management type packet, and a packet of an unknown type. A quantity of service flow packets in all packets is largest.

The service flow packet and the non-service flow packet compete with each other. To ensure service reliability, transmission space of the non-service flow packet is compressed. As a result, transmission efficiency of the non-service flow packet is excessively low. In addition, when the primary MPU is attacked by an abnormal service flow packet, a central processing unit (central processing unit, CPU) of the primary MPU is overloaded. As a result, operation and maintenance management cannot be performed on the device.

### SUMMARY

Embodiments of this application provide a packet transmission method and a frame-shaped communication device. The packet transmission method is applied to the frame-shaped communication device. The technical solutions provided in embodiments of this application can improve transmission efficiency of a non-service flow packet, and reduce impact of attack by a service flow packet on an operation and maintenance task and a management task. The technical solutions of the packet transmission method and the frame-shaped communication device are as follows.

According to a first aspect, a packet transmission method is provided. The method is applied to a frame-shaped communication device. The frame-shaped communication device includes a first main processing unit (main processing unit, MPU), a second MPU, and a line processing unit (line processing unit, LPU). The first MPU is connected to the LPU through a first transmission channel. The second MPU is connected to the LPU through a second transmission channel. The method includes: The LPU determines a type of a to-be-transmitted first packet. If the first packet belongs to a service flow packet, the LPU sends the first packet to the first MPU through the first transmission channel. If the first packet belongs to a non-service flow packet, the LPU sends the first packet to the second MPU through the second transmission channel.

The frame-shaped communication device may be any communication device having an LPU and at least two MPUs. For example, the frame-shaped communication device may be a modular switch or a modular router.

The MPU (the first MPU or the second MPU) which may also be referred to as a main processing unit, integrates a main control unit and a system maintenance unit, and is responsible for centralized control and management, and data exchange of the frame-shaped communication device. The MPU includes a central processing unit (central processing unit, CPU) and a local area network switch (lan switch, LSW) chip. The CPU is responsible for centralized control and management. The LSW chip is responsible for forwarding a packet. After entering a network interface of the MPU, the packet is forwarded by the LSW chip, and then sent to the CPU for processing. The LSW chip may also be referred to as a forwarding engine, and may be referred to as an LSW for short.

The LPU may also be referred to as a line interface processing unit or a service board. An IP (Internet Protocol) data packet outside the frame-shaped communication device is input to the frame-shaped communication device from a physical interface of the LPU. One frame-shaped communication device may include a plurality of LPUs.

The first transmission channel may be a 100 M, 1 G, or 10 G transmission channel. The second transmission channel may also be a 100 M, 1 G, or 10 G transmission channel. The first transmission channel and the second transmission channel may be the same or may be different in bandwidth. This is not limited in this application.

In the solution shown in this embodiment of this application, when sending a packet to the MPU, the LPU determines the type of the to-be-transmitted packet, and determines a target MPU based on the type of the to-be-transmitted packet. Specifically, when the to-be-transmitted first packet belongs to the service flow packet, the first packet is sent to the first MPU through the first transmission channel. When the to-be-transmitted second packet belongs to the non-service flow packet, the second packet is sent to the second MPU through the second transmission channel.

Therefore, the service flow packet and the non-service flow packet are transmitted through different transmission channels, the service flow packet and the non-service flow packet do not compete with each other, and both transmission efficiency of the service flow packet and transmission efficiency of the non-service flow packet are high. In addition, when the first MPU is attacked by an abnormal service flow packet, the second MPU is not affected, and the second MPU can further normally perform operation and maintenance management on the device.

In a possible implementation, the non-service flow packet includes one or more of an operation and maintenance task type packet, a configuration management type packet, or a packet of an unknown type. The operation and maintenance task type packet includes a Google remote procedure call (Google remote procedure call, gRPC) packet, a secure shell (secure shell, ssh) packet, and a simple network management protocol (simple network management protocol, snmp) packet. The configuration management type packet includes a packet carried by an entry delivery task, an entry configuration task, an entry deletion task, and an entry reconciliation task.

In a possible implementation, after that the LPU sends the first packet to the second MPU through the second transmission channel, the method further includes: The second MPU determines that the first packet belongs to the packet of the unknown type, and performs discarding or rate limiting processing on the first packet.

In the solution shown in this embodiment of this application, to reduce impact on a normal operation and maintenance task and a configuration management task, the second MPU may perform filtering processing on the non-service flow packet received through the second transmission channel.

Specifically, the second MPU determines a packet type of the received non-service flow packet, and when determining that the packet type is the packet of the unknown type, performs discarding or rate limiting processing on the packet of the unknown type. The operation and maintenance task type packet and the configuration management type packet are normally permitted.

In a possible implementation, the first packet belongs to the operation and maintenance task type packet, and before that the LPU sends the first packet to the second MPU through the second transmission channel, the method further includes: The LPU receives a second packet from the second MPU through the second transmission channel. The second packet belongs to the operation and maintenance task type packet, and the second packet includes a device information collection indication. The LPU collects device information of the frame-shaped communication device based on the device information collection indication.

That the LPU sends the first packet to the second MPU through the second transmission channel includes: The LPU sends the device information to the second MPU through the second transmission channel. The device information is included in the first packet.

The device information is included in the first packet, the device information collection indication is included in the second packet, and both the first packet and the second packet belong to the operation and maintenance task type packet.

In the solution shown in this embodiment of this application, when processing an operation and maintenance task, the second MPU needs to obtain the device information of the frame-shaped communication device.

Specifically, the second MPU sends the device information collection indication to the LPU through the second transmission channel, and the LPU receives the device collection indication. Then, the LPU collects the device information of the frame-shaped communication device based on the device collection indication. Then, the LPU sends the collected device information to the second MPU through the second transmission channel. The second MPU receives the device information and performs corresponding processing.

In a possible implementation, the first MPU is a primary MPU, and the second MPU is a secondary MPU.

In the solution shown in this embodiment of this application, because a data amount of the service flow packet is greater than a data amount of the non-service flow packet, the primary MPU may perform processing related to the service flow packet, and the secondary MPU may perform processing related to the non-service flow packet. To be specific, the primary MPU may be configured as the foregoing first MPU, and the secondary MPU may be configured as the foregoing second MPU.

In addition, the first MPU and the second MPU are in a mutual primary/secondary relationship, so that when one MPU fails, another MPU may bear processing of all packets, and transmit all types of packets through a transmission channel corresponding to the MPU. Therefore, working reliability of the frame-shaped communication device is improved.

In a possible implementation, when the first MPU is in a failed state, the LPU sends both a packet belonging to the service flow packet and a packet belonging to the non-service flow packet to the second MPU through the second transmission channel.

That the first MPU fails means that the first MPU cannot perform corresponding processing on the service flow packet any more. Specifically, the first MPU may be faulty.

In the solution shown in this embodiment of this application, when the first MPU is in the failed state, the second MPU may implement original processing of the first MPU. Specifically, the LPU determines that the first MPU fails, and sends both the packet belonging to the service flow packet and the packet belonging to the non-service flow packet to the second MPU through the second transmission channel. The second MPU performs the corresponding processing on the received service flow packet and non-service flow packet.

In a possible implementation, when the second MPU is in a failed state, the LPU sends both a packet belonging to the service flow packet and a packet belonging to the non-service flow packet to the first MPU through the first transmission channel.

That the second MPU fails means that the second MPU cannot perform corresponding processing on the non-service flow packet any more. For example, the second MPU may be faulty.

In the solution shown in this embodiment of this application, when the second MPU is in the failed state, the first MPU may implement original processing of the second MPU. Specifically, the LPU determines that the second MPU fails, and sends both the packet belonging to the service flow packet and the packet belonging to the non-service flow packet to the first MPU through the first transmission channel. The first MPU performs the corresponding processing on the received service flow packet and non-service flow packet.

In a possible implementation, the service flow packet includes a border gateway protocol (border gateway protocol, BGP) packet, an open shortest path first (open shortest path first, OSPF) packet, an intermediate system to intermediate system (intermediate system to intermediate system), IS-IS) packet, and a routing information protocol (routing information protocol, RIP) packet.

According to a second aspect, a packet transmission method is provided. The method is applied to a frame-shaped communication device. The frame-shaped communication device includes a first main processing unit MPU, a second MPU, and a line processing unit LPU. The first MPU is connected to the LPU through a first transmission channel. The second MPU is connected to the LPU through a second transmission channel. The first transmission channel is used to transmit a service flow packet between the LPU and the first MPU. The method includes: The second MPU sends a second packet to the LPU through the second transmission channel, where the second packet belongs to a non-service flow packet.

The frame-shaped communication device may be any communication device having an LPU and at least two MPUs. For example, the frame-shaped communication device may be a modular switch or a modular router.

The MPU (the first MPU or the second MPU) which may also be referred to as a main processing unit, integrates a main control unit and a system maintenance unit, and is responsible for centralized control and management, and data exchange of the frame-shaped communication device. The MPU includes a central processing unit CPU and an LSW chip. The CPU is responsible for centralized control and management. The LSW chip is responsible for forwarding a packet. After entering a network interface of the MPU, the packet is forwarded by the LSW chip, and then sent to the CPU for processing. The LSW chip may also be referred to as a forwarding engine, and may be referred to as an LSW for short.

The LPU may also be referred to as a line interface processing unit or a service board. An IP data packet outside the frame-shaped communication device is input to the frame-shaped communication device from a physical interface of the LPU. One frame-shaped communication device may include a plurality of LPUs.

The first transmission channel may be a 100 M, 1 G, or 10 G transmission channel. The second transmission channel may also be a 100 M, 1 G, or 10 G transmission channel. The first transmission channel and the second transmission channel may be the same or may be different in bandwidth. This is not limited in this application.

In the solution shown in this embodiment of this application, the first MPU is connected to the LPU through the first transmission channel, and the first transmission channel is used to transmit the service flow packet between the first MPU and the LPU. The second MPU is connected to the LPU through the second transmission channel, and the second transmission channel is used to transmit a non-service flow packet.

Therefore, the service flow packet and the non-service flow packet are transmitted through different transmission channels, the service flow packet and the non-service flow packet do not compete with each other, and both transmission efficiency of the service flow packet and transmission efficiency of the non-service flow packet are high. In addition, when the first MPU is attacked by an abnormal service flow packet, the second MPU is not affected, and the second MPU can further normally perform operation and maintenance management on the device.

In a possible implementation, the non-service flow packet includes one or more of an operation and maintenance task type packet, a configuration management type packet, or a packet of an unknown type. The operation and maintenance task type packet includes a gRPC packet, an ssh packet, and an snmp packet. The configuration management type packet includes a packet carried by an entry delivery task, an entry configuration task, an entry deletion task, and an entry reconciliation task.

In a possible implementation, the method further includes: The second MPU performs discarding or rate limiting processing on a first packet that is received from the LPU through the second transmission channel. The first packet belongs to the packet of the unknown type.

In the solution shown in this embodiment of this application, to reduce impact on a normal operation and maintenance task and a configuration management task, the second MPU may perform filtering processing on the non-service flow packet received through the second transmission channel.

Specifically, the second MPU determines a packet type of the received non-service flow packet, and when determining that the packet type is the packet of the unknown type, performs discarding or rate limiting processing on the packet of the unknown type. The operation and maintenance task type packet and the configuration management type packet are normally permitted.

In a possible implementation, the second packet belongs to the operation and maintenance task type packet. That the second MPU sends a second packet to the LPU through the second transmission channel includes: The second MPU sends a device information collection indication to the LPU through the second transmission channel. The device information collection indication is included in the second packet, and the device information collection indication is used to indicate the LPU to collect device information of the frame-shaped communication device.

After that the second MPU sends a non-service flow packet to the LPU through the second transmission channel, the method further includes: The second MPU receives a first packet that is sent by the LPU through the second transmission channel. The first packet belongs to the operation and maintenance task type packet, and the device information is included in the first packet.

The device information is included in the first packet, the device information collection indication is included in the second packet, and both the first packet and the second packet belong to the operation and maintenance task type packet.

In the solution shown in this embodiment of this application, when processing an operation and maintenance task, the second MPU needs to obtain the device information of the frame-shaped communication device.

Specifically, the second MPU sends the device information collection indication to the LPU through the second transmission channel, and the LPU receives the device collection indication. Then, the LPU collects the device information of the frame-shaped communication device based on the device collection indication. Then, the LPU sends the collected device information to the second MPU through the second transmission channel. The second MPU receives the device information and performs corresponding processing.

In a possible implementation, the first MPU is connected to the second MPU through a third transmission channel, and the second packet belongs to the configuration management type packet. Before that the second MPU sends a second packet to the LPU through the second transmission channel, the method further includes: The second MPU obtains, through the third transmission channel, an entry synchronized by the first MPU.

The second MPU sends the entry to the LPU through the second transmission channel. The entry is included in the second packet, and the entry is a routing entry or a forwarding entry.

The third transmission channel may be a 1 GE or 10 GE transmission channel. The entry is the routing entry or the forwarding entry, is included in the second packet, and belongs to the configuration management type packet.

In the solution shown in this embodiment of this application, a configuration management task mainly relates to entry delivery processing. During entry delivery, first, the second MPU performs entry synchronization through the third transmission channel, to obtain the entry synchronized by the first MPU. Then, the second MPU sends the entry to the LPU through the second transmission channel, to complete the entry delivery processing.

In a possible implementation, the first MPU is a primary MPU, and the second MPU is a secondary MPU.

In the solution shown in this embodiment of this application, because a data amount of the service flow packet is greater than a data amount of the non-service flow packet, the primary MPU may perform processing related to the service flow packet, and the secondary MPU may perform processing related to the non-service flow packet. To be specific, the primary MPU may be configured as the foregoing first MPU, and the secondary MPU may be configured as the foregoing second MPU.

In addition, the first MPU and the second MPU are in a mutual primary/secondary relationship, so that when one MPU fails, another MPU may bear processing of all packets, and transmit all types of packets through a transmission channel corresponding to the MPU. Therefore, working reliability of the frame-shaped communication device is improved.

In a possible implementation, the method further includes: When the first MPU is in a failed state, the second MPU sends both a packet belonging to the service flow packet and a packet belonging to the non-service flow packet to the LPU through the second transmission channel.

That the first MPU fails means that the first MPU cannot perform corresponding processing on the service flow packet any more. Specifically, the first MPU may be faulty.

In the solution shown in this embodiment of this application, when the first MPU is in the failed state, the second MPU may implement original processing of the first MPU. Then, the second MPU sends the packet belonging to the service flow packet and the packet belonging to the non-service flow packet to the LPU through the second transmission channel.

In a possible implementation, the method further includes: When the second MPU is in a failed state, the first MPU sends both a packet belonging to the service flow packet and a packet belonging to the non-service flow packet to the LPU through the first transmission channel.

That the second MPU fails means that the second MPU cannot perform corresponding processing on the non-service flow packet any more. For example, the second MPU may be faulty.

In the solution shown in this embodiment of this application, when the second MPU is in the failed state, the first MPU may implement original processing of the second MPU. Then, the first MPU sends the packet belonging to the service flow packet and the packet belonging to the non-service flow packet to the LPU through the first transmission channel.

In a possible implementation, the service flow packet includes a BGP packet, an OSPF packet, an IS-IS packet, and a RIP packet.

According to a third aspect, a frame-shaped communication device is provided. The frame-shaped communication device includes a first main processing unit MPU, a second MPU, and a line processing unit LPU. The first MPU is connected to the LPU through a first transmission channel. The second MPU is connected to the LPU through a second transmission channel.

The LPU is configured to:
determine a type of a to-be-transmitted first packet; and
if the first packet belongs to a service flow packet, send the first packet to the first MPU through the first transmission channel; or
if the first packet belongs to a non-service flow packet, send the first packet to the second MPU through the second transmission channel.

In a possible implementation, the second MPU is configured to:
determine that the received first packet belongs to a packet of an unknown type, and perform discarding or rate limiting processing on the first packet.

In a possible implementation, the first packet belongs to an operation and maintenance task type packet, and the LPU is further configured to:
receive a second packet from the second MPU through the second transmission channel, where the second packet belongs to the operation and maintenance task type packet, and the second packet includes a device information collection indication;
collect device information of the frame-shaped communication device based on the device information collection indication; and
send the device information to the second MPU through the second transmission channel, where the device information is included in the first packet.

In a possible implementation, the LPU is further configured to:
when the first MPU is in a failed state, send both a packet belonging to the service flow packet and a packet belonging to the non-service flow packet to the second MPU through the second transmission channel.

In a possible implementation, the LPU is further configured to:
when the second MPU is in a failed state, send both a packet belonging to the service flow packet and a packet belonging to the non-service flow packet to the first MPU through the first transmission channel.

In a possible implementation, the non-service flow packet includes one or more of an operation and maintenance task type packet, a configuration management type packet, or a packet of an unknown type.

The operation and maintenance task type packet includes a gRPC packet, an ssh packet, and an snmp packet.

The configuration management type packet includes a packet carried by an entry delivery task, an entry configuration task, an entry deletion task, and an entry reconciliation task.

In a possible implementation, the first MPU is a primary MPU, and the second MPU is a secondary MPU.

In a possible implementation, the service flow packet includes a BGP packet, an OSPF packet, an IS-IS packet, and a RIP packet.

According to a fourth aspect, a frame-shaped communication device is provided. The frame-shaped communication device includes a first main processing unit MPU, a second MPU, and a line processing unit LPU. The first MPU is connected to the LPU through a first transmission channel. The second MPU is connected to the LPU through a second transmission channel. The first transmission channel is used to transmit a service flow packet between the LPU and the first MPU.

The second MPU is configured to:
send a second packet to the LPU through the second transmission channel. The second packet belongs to a non-service flow packet.

In a possible implementation, the second MPU is further configured to:
perform discarding or rate limiting processing on a first packet that is received from the LPU through the second transmission channel. The first packet belongs to a packet of an unknown type.

In a possible implementation, the second packet belongs to an operation and maintenance task type packet, and the second MPU is further configured to:
send a device information collection indication to the LPU through the second transmission channel, where the device information collection indication is included in the second packet, and the device collection information indication is used to indicate the LPU to collect device information of the frame-shaped communication device; and
receive a first packet that is sent by the LPU through the second transmission channel, where the first packet belongs to the operation and maintenance task type packet, and the device information is included in the first packet.

In a possible implementation, the first MPU is connected to the second MPU through a third transmission channel, the second packet belongs to a configuration management type packet, and the second MPU is configured to:
obtain, through the third transmission channel, an entry synchronized by the first MPU; and
send the entry to the LPU through the second transmission channel, where the entry is included in the second packet, and the entry is a routing entry or a forwarding entry.

In a possible implementation, the second MPU is further configured to:
when the first MPU is in a failed state, send both a packet belonging to the service flow packet and a packet belonging to the non-service flow packet to the LPU through the second transmission channel.

In a possible implementation, the first MPU is configured to:
when the second MPU is in a failed state, send both a packet belonging to the service flow packet and a packet belonging to the non-service flow packet to the LPU through the first transmission channel.

In a possible implementation, the non-service flow packet includes one or more of an operation and maintenance task type packet, a configuration management type packet, or a packet of an unknown type.

The operation and maintenance task type packet includes a gRPC packet, an ssh packet, and an snmp packet.

The configuration management type packet includes a packet carried by an entry delivery task, an entry configuration task, an entry deletion task, and an entry reconciliation task.

In a possible implementation, the first MPU is a primary MPU, and the second MPU is a secondary MPU.

In a possible implementation, the service flow packet includes a BGP packet, an OSPF packet, an IS-IS packet, and a RIP packet.

Beneficial effects brought by the technical solutions provided in embodiments of this application are as follows.

Embodiments of this application provide the packet transmission method. The packet transmission method is applied to the frame-shaped communication device. The frame-shaped communication device includes the first MPU, the second MPU, and the LPU. The first MPU is connected to the LPU through the first transmission channel, and the second MPU is connected to the LPU through the second transmission channel. During packet transmission, the service flow packet is transmitted through the first transmission channel, and the non-service flow packet is transmitted through the second transmission channel. Therefore, in a packet transmission process, the service flow packet and the non-service flow packet do not compete with each other, so that both transmission efficiency of the service flow packet and transmission efficiency of the non-service flow packet are high. In addition, when the first MPU is attacked by an abnormal service flow packet, the second MPU is not affected, and can further normally perform operation and maintenance management on the device.

### BRIEF DESCRIPTION OF DRAWINGS

FIG. 1 is a schematic diagram of a structure of a frame-shaped communication device according to an embodiment of this application;
FIG. 2 is a schematic diagram of a structure of a frame-shaped communication device according to an embodiment of this application;
FIG. 3 is a schematic diagram of a structure of a frame-shaped communication device according to an embodiment of this application;
FIG. 4 is a flowchart of a packet transmission method according to an embodiment of this application;
FIG. 5 is a flowchart of a packet transmission method according to an embodiment of this application;
FIG. 6 is a schematic diagram of transmission of an operation and maintenance task type packet according to an embodiment of this application;
FIG. 7 is a schematic diagram of transmission of a configuration management type packet according to an embodiment of this application; and
FIG. 8 is a sequence diagram of transmission of a configuration management type packet according to an embodiment of this application.

### DESCRIPTION OF EMBODIMENTS

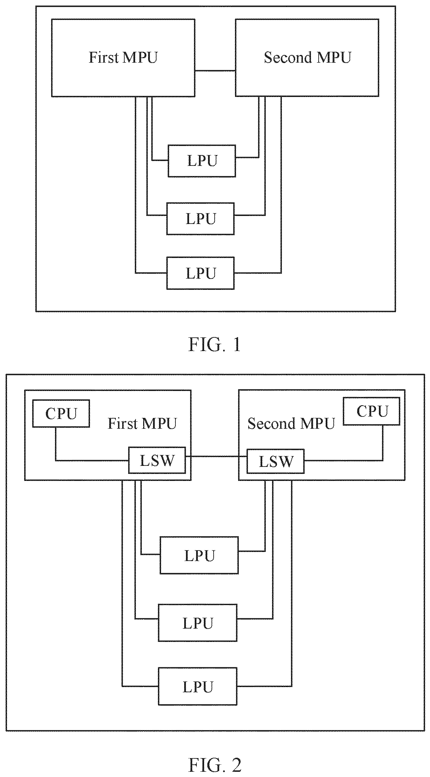

Embodiments of this application provide a packet transmission method and a frame-shaped communication device. The packet transmission method may be applied to the frame-shaped communication device. The frame-shaped communication device may be a modular switch, a modular router, or the like. As shown in FIG. 1 to FIG. 3, the frame-shaped communication device includes a first main processing unit (main processing unit, MPU), a second MPU, and a line processing unit (line processing unit, LPLT).

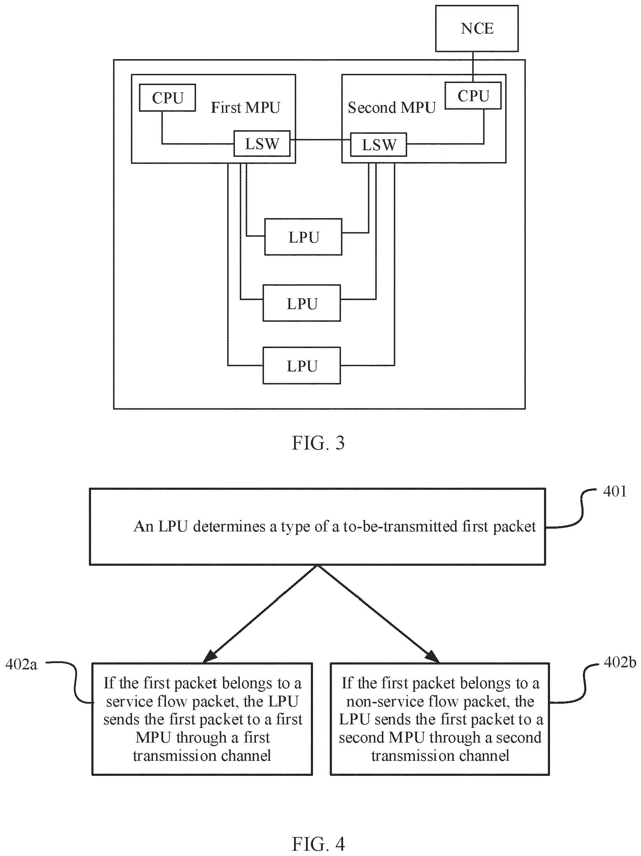

The MPU (the first MPU or the second MPU) which may also be referred to as a main processing unit, integrates a main control unit and a system maintenance unit, and is responsible for centralized control and management, and data exchange of the frame-shaped communication device. As shown in FIG. 2 and FIG. 3, the MPU includes a central processing unit (central processing unit, CPU) and a local area network switch (lan switch, LSW) chip. The CPU is responsible for centralized control and management. The LSW chip is responsible for forwarding a packet. After entering a network interface of the MPU, the packet is forwarded by the LSW chip, and then sent to the CPU for processing. The LSW chip may also be referred to as a forwarding engine, and may be referred to as an LSW for short. To improve reliability of the frame-shaped communication device, the MPU in the frame-shaped communication device provided in this embodiment of this application may use a 1:1 redundancy backup design, that is, the first MPU and the second MPU may be a primary/secondary MPU of each other. Most of packets processed by the frame-shaped communication device belong to a service flow packet. Therefore, related processing of the service flow packet may be performed by the primary MPU, and related processing of a non-service flow packet may be performed by the secondary MPU. In other words, the first MPU in the frame-shaped communication device may be the primary MPU, and the second MPU in the frame-shaped communication device may be the secondary MPU.

The LPU may also be referred to as a line interface processing unit or a service board. An IP (Internet Protocol) data packet outside the frame-shaped communication device is input to the frame-shaped communication device from a physical interface of the LPU. One frame-shaped communication device may include a plurality of LPUs.

The first MPU is connected to the LPU through a first transmission channel, and the second MPU is connected to the LPU through a second transmission channel. The first transmission channel is used to transmit the service flow packet, and the second transmission channel is used to transmit the non-service flow packet. Therefore, the service flow packet and the non-service flow packet are transmitted through different transmission channels, the service flow packet and the non-service flow packet do not compete with each other, and both transmission efficiency of the service flow packet and transmission efficiency of the non-service flow packet are high. In addition, the first MPU is responsible for processing the service flow packet, and the second MPU is responsible for processing the non-service flow packet, so that when the first MPU is attacked by an abnormal service flow packet, the second MPU is not affected, and the second MPU can further normally perform operation and maintenance management on the device. The first transmission channel may be a 100 M, 1 G, or 10 G transmission channel. The second transmission channel may also be a 100 M, 1 G, or 10 G transmission channel. The first transmission channel and the second transmission channel may be the same or may be different in bandwidth. This is not limited in this application. In addition, the first MPU and the second MPU may be connected through a third transmission channel, so that data synchronization, for example, entry synchronization may be performed, for example, synchronization of a routing entry or a forwarding entry, may be performed between the first MPU and the second MPU. The third transmission channel may be a 1 GE or 10 GE transmission channel.

It should be additionally noted that, as shown in FIG. 3, because a configuration management task and an operation and maintenance management task are processed by the second MPU, the second MPU may be further connected to a network cloud engine (network cloud engine, NCE). Therefore, the NCE can directly control the second MPU without being forwarded by the first MPU.

To facilitate understanding of the service flow packet and the non-service flow packet, the following separately describes the service flow packet and the non-service flow packet.

The service flow packet may also be referred to as a protocol packet. The service flow packet includes a border gateway protocol (border gateway protocol, BGP) packet, an open shortest path first (open shortest path first, OSPF) packet, an intermediate system to intermediate system (intermediate system to intermediate system, IS-IS) packet, and a routing information protocol (routing information protocol, RIP) packet, but is not limited thereto.

The non-service flow packet may include one or more of an operation and maintenance task type packet, a configuration management type packet, or a packet of an unknown type. The operation and maintenance task type packet includes, but is not limited to, a Google remote procedure call (Google remote procedure call, gRPC) packet, a secure shell (secure shell, ssh) packet, and a simple network management protocol (simple network management protocol, snmp) packet. The configuration management type packet includes, but is not limited to, a packet carried by an entry delivery task, an entry configuration task, an entry deletion task, and an entry reconciliation task. The packet of the unknown type may also be referred to as an unknown packet.

An embodiment of this application provides a packet transmission method. As shown in FIG. 4, the packet transmission method may be implemented by an LPU in a frame-shaped communication device. The following describes in detail a processing procedure of the method with reference to a specific implementation. Content may be as follows.

Step 401: The LPU determines a type of a to-be-transmitted first packet.

In the solution shown in this embodiment of this application, when sending a packet to an MPU, the LPU needs to first determine the type of the to-be-transmitted first packet, then determine a target MPU based on a specific type, and then send the first packet to the target MPU through a corresponding transmission channel. Specifically, if the first packet belongs to a service flow packet, Step 402a is performed; or if the first packet belongs to a non-service flow packet, Step 402b is performed.

Step 402a: If the first packet belongs to the service flow packet, the LPU sends the first packet to a first MPU through a first transmission channel.

In the solution shown in this embodiment of this application, when determining that the first packet belongs to the service flow packet, the LPU sends the first packet to the first MPU through the first transmission channel, and the first MPU performs corresponding processing on the service flow packet.

Step 402b: If the second packet belongs to the non-service flow packet, the LPU sends the first packet to a second MPU through a second transmission channel.

In the solution shown in this embodiment of this application, when determining that the first packet belongs to the non-service flow packet, the LPU sends the first packet to the second MPU through the second transmission channel, and the second MPU performs corresponding processing on the non-service flow packet.

In addition, to reduce impact on a normal operation and maintenance task and a configuration management task, after receiving the first packet, the second MPU may perform filtering processing on the received first packet. First, the second MPU determines a type of the received first packet. If it is determined that the first packet belongs to a packet of an unknown type, discarding or rate limiting processing is performed on the first packet.

In the solution shown in this embodiment of this application, an LSW in the second MPU may perform the filtering processing. Specifically, the LSW determines a type to which the received first packet belongs. If determining that the first packet belongs to the packet of the unknown type, the LSW performs the discarding or rate limiting processing on the first packet, and sends a first packet obtained after the rate limiting processing to a CPU in the second MPU for processing. If the LSW determines that the received first packet belongs to an operation and maintenance task type packet or a configuration management type packet, the LSW directly sends the first packet to a CPU in the second MPU for processing. That the first packet is sent to the CPU for processing may be that the first packet is sent to a protocol stack in the CPU for processing.

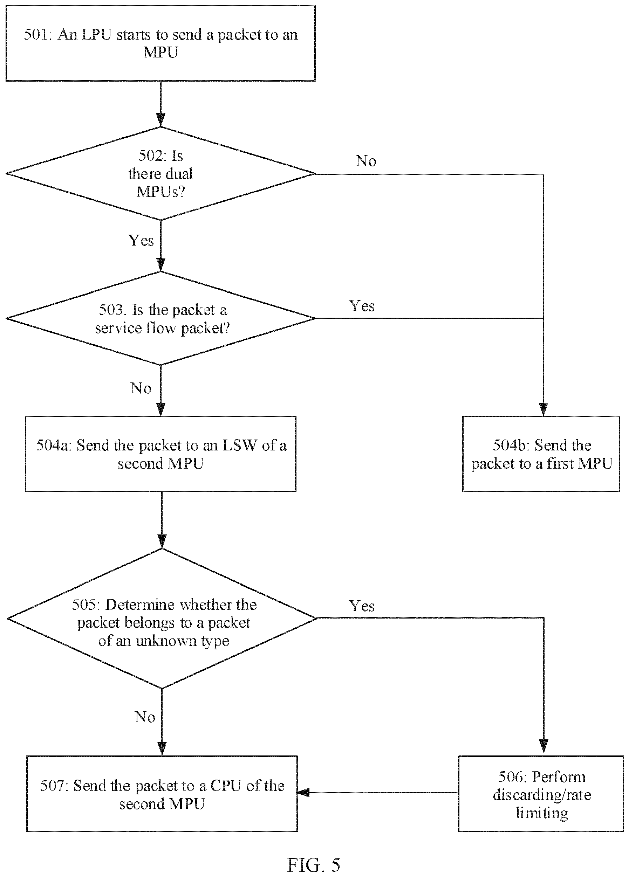

As shown in FIG. 5, this application provides a specific processing procedure in which the LPU sends the packet to the CPU in the second MPU. Content may be described as follows.

Step 501: The LPU starts to send the packet to the MPU.

Step 502: The LPU determines whether a frame-shaped communication device has two MPUs, that is, determines whether the frame-shaped communication device has the first MPU and the second MPU.

Step 503: After determining that the frame-shaped communication device has the two MPUs (that is, has the first MPU and the second MPU), the LPU determines the type of the to-be-transmitted first packet.

Step 504a: If determining that the first packet does not belong to the service flow packet, the LPU sends the first packet to the LSW in the second MPU.

Step 504b: If determining that the first packet belongs to the service flow packet, the LPU sends the first packet to the first MPU. Alternatively, if determining that the frame-shaped communication device has only the first MPU, the LPU directly sends the first packet to the first MPU.

Step 505: The LSW in the second MPU determines a packet type of the received first packet, and determines whether the first packet belongs to the packet of the unknown type.

Step 506: If determining that the received first packet belongs to the packet of the unknown type, the LSW performs discarding or rate limiting processing on the first packet.

Step 507: If determining that the received first packet does not belong to the packet of the unknown type, the LSW sends the first packet to the CPU in the second MPU for processing, or sends a first packet obtained after the rate limiting processing to the CPU in the second MPU for processing.

An embodiment of this application further provides a packet transmission method. The packet transmission method may be implemented by a second MPU in a frame-shaped communication device. In the frame-shaped communication device, a first MPU is connected to an LPU through a first transmission channel, the second MPU is connected to the LPU through a second transmission channel, and the first transmission channel is used to transmit a service flow packet between the LPU and the first MPU. The method includes:
the second MPU sends a second packet to the LPU through the second transmission channel. The second packet belongs to a non-service flow packet.

In the solution shown in this embodiment of this application, the first MPU is connected to the LPU through the first transmission channel, and the first transmission channel is used to transmit the service flow packet between the first MPU and the LPU. The second MPU is connected to the LPU through the second transmission channel, and the second transmission channel is used to transmit the non-service flow packet.

Therefore, the service flow packet and the non-service flow packet are transmitted through different transmission channels, the service flow packet and the non-service flow packet do not compete with each other, and both transmission efficiency of the service flow packet and transmission efficiency of the non-service flow packet are high. In addition, when the first MPU is attacked by an abnormal service flow packet, the second MPU is not affected, and the second MPU can further normally perform operation and maintenance management on the device.

The following describes this application in more detail with reference to the foregoing two packet transmission methods and specific examples.
(1) Process an operation and maintenance task. The operation and maintenance task mainly involves collection of device information of the frame-shaped communication device. A specific processing procedure may be described as follows.

First, the second MPU sends a device information collection indication to the LPU through the second transmission channel. Then, the LPU receives the device information collection indication through the second transmission channel, and collects the device information of the frame-shaped communication device based on the device information collection indication. Then, the LPU sends the collected device information to the second MPU through the second transmission channel. Finally, the second MPU receives the device information through the second transmission channel.

Packets carried in the device information and the device information collection indication are both operation and maintenance task type packets.

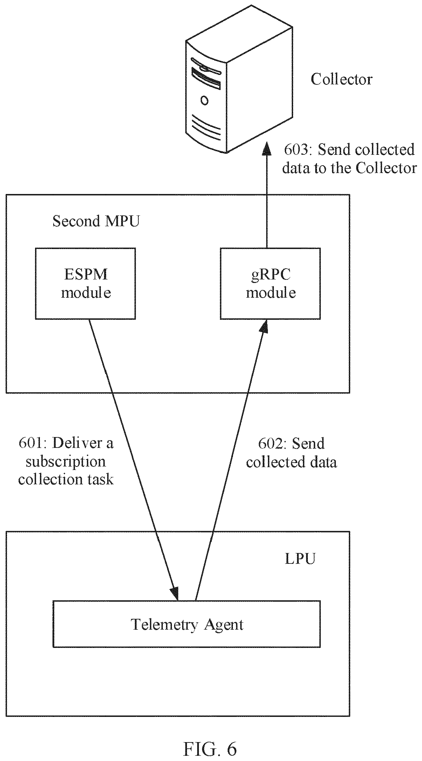

As shown in FIG. 6, telemetry data collection is used as an example to describe a transmission process of the operation and maintenance task type packet.

Step 601: An ESPM (Telemetry task decomposition center) module in the second MPU delivers a subscription collection task to a telemetry agent in the LPU.

Step 602: The telemetry agent collects data of various types based on the delivered collection task, and sends the collected data to a gRPC module of the second MPU.

Step 603: The gRPC module performs model conversion on the collected data, and reports converted collected data to a collector.

(2) Process a configuration management task. The configuration management task mainly involves entry delivery, entry configuration, entry deletion, entry reconciliation, and the like. A specific processing procedure may be described as follows.

First, the second MPU obtains, through a third transmission channel, an entry synchronized by the first MPU. Then, the second MPU sends the entry to the LPU through the second transmission channel. The entry is a routing entry or a forwarding entry.

In the solution shown in this embodiment of this application, the second MPU obtains, through the third transmission channel, the entry synchronized by the first MPU. An existing synchronization mechanism may be used as a specific synchronization mechanism, and details are not described herein again. After obtaining the entry, the second MPU sends the entry to the LPU through the second transmission channel.

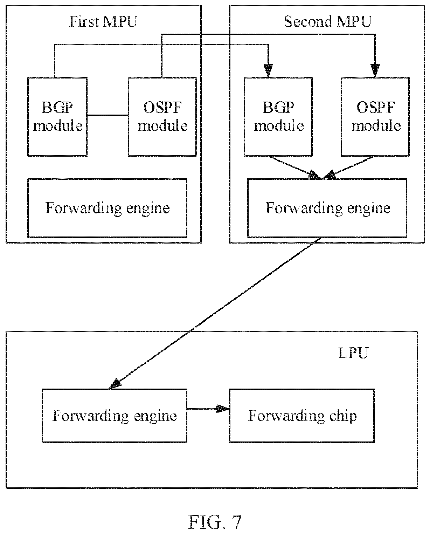

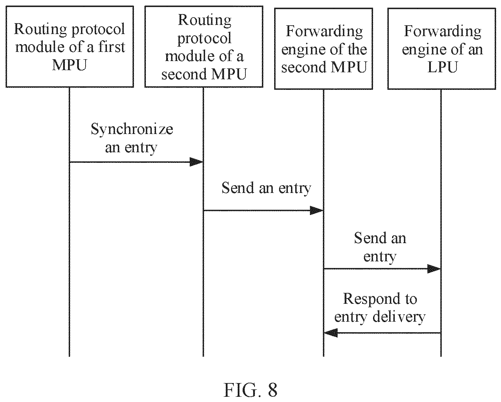

As shown in FIG. 7 and FIG. 8, the entry delivery is used as an example to describe a transmission process of a configuration management type packet. FIG. 7 is a schematic diagram of transmission of the configuration management type packet. FIG. 8 is a sequence diagram of transmission of the configuration management type packet.
Step 1: A routing protocol module (which includes a BGP module and an OSPF module) of the first MPU synchronizes an entry to a routing protocol module of the second MPU.
Step 2: The routing protocol module of the second MPU sends an entry to a forwarding engine of the second MPU.
Step 3: The forwarding engine of the second MPU sends an entry to a forwarding engine of the LPU.
Step 4: The forwarding engine of the LPU sends an entry to a forwarding chip of the LPU for processing.
Step 5: After processing the entry, the LPU responds to entry delivery, and sends an entry to the forwarding engine of the second MPU.

It should be additionally noted that the first MPU and the second MPU may be in a mutual primary/secondary relationship, so that when one MPU fails, another MPU may bear processing of all packets, and transmit all types of packets through a transmission channel corresponding to the MPU. Therefore, working reliability of the frame-shaped communication device is improved. A specific processing process may be described as follows.

In a possible implementation, when the first MPU is in a failed state, the LPU sends both a packet belonging to the service flow packet and a packet belonging to the non-service flow packet to the second MPU through the second transmission channel. Correspondingly, the second MPU sends both a packet belonging to the service flow packet and a packet belonging to the non-service flow packet to the LPU through the second transmission channel.

In another possible implementation, when the second MPU is in a failed state, the LPU sends both a packet belonging to the service flow packet and a packet belonging to the non-service flow packet to the first MPU through the first transmission channel. Correspondingly, the first MPU sends both a packet belonging to the service flow packet and a packet belonging to the non-service flow packet to the LPU through the first transmission channel.

An embodiment of this application further provides a frame-shaped communication device. As shown in FIG. 1 to FIG. 3, the frame-shaped communication device includes a first main processing unit MPU, a second MPU, and a line processing unit LPU. The first MPU is connected to the LPU through a first transmission channel. The second MPU is connected to the LPU through a second transmission channel.

The LPU is configured to:
determine a type of a to-be-transmitted first packet; and
if the first packet belongs to a service flow packet, send the first packet to the first MPU through the first transmission channel; or
if the first packet belongs to a non-service flow packet, send the first packet to the second MPU through the second transmission channel.

In a possible implementation, the second MPU is configured to:
determine that the received first packet belongs to a packet of an unknown type, and perform discarding or rate limiting processing on the first packet.

In a possible implementation, the first packet belongs to an operation and maintenance task type packet, and the LPU is further configured to:
receive a second packet from the second MPU through the second transmission channel, where the second packet belongs to the operation and maintenance task type packet, and the second packet includes a device information collection indication;
collect device information of the frame-shaped communication device based on the device information collection indication; and
send the device information to the second MPU through the second transmission channel, where the device information is included in the first packet.

In a possible implementation, the LPU is further configured to:
when the first MPU is in a failed state, send both a packet belonging to the service flow packet and a packet belonging to the non-service flow packet to the second MPU through the second transmission channel.

In a possible implementation, the LPU is further configured to:
when the second MPU is in a failed state, send both a packet belonging to the service flow packet and a packet belonging to the non-service flow packet to the first MPU through the first transmission channel.

In a possible implementation, the non-service flow packet includes one or more of an operation and maintenance task type packet, a configuration management type packet, or a packet of an unknown type.

The operation and maintenance task type packet includes a gRPC packet, an ssh packet, and an snmp packet.

The configuration management type packet includes a packet carried by an entry delivery task, an entry configuration task, an entry deletion task, and an entry reconciliation task.

In a possible implementation, the first MPU is a primary MPU, and the second MPU is a secondary MPU.

In a possible implementation, the service flow packet includes a BGP packet, an OSPF packet, an IS-IS packet, and a RIP packet.

In a possible implementation, the second MPU is further connected to an NCE.

An embodiment of this application further provides another frame-shaped communication device. As shown in FIG. 1 to FIG. 3, the frame-shaped communication device includes a first main processing unit MPU, a second MPU, and a line processing unit LPU. The first MPU is connected to the LPU through a first transmission channel. The second MPU is connected to the LPU through a second transmission channel. The first transmission channel is used to transmit a service flow packet between the LPU and the first MPU.

The second MPU is configured to:
send a second packet to the LPU through the second transmission channel. The second packet belongs to a non-service flow packet.

In a possible implementation, the second MPU is further configured to:
perform discarding or rate limiting processing on a first packet that is received from the LPU through the second transmission channel. The first packet belongs to a packet of an unknown type.

In a possible implementation, the second packet belongs to an operation and maintenance task type packet, and the second MPU is further configured to:
send a device information collection indication to the LPU through the second transmission channel, where the device information collection indication is included in the second packet, and the device collection information indication is used to indicate the LPU to collect device information of the frame-shaped communication device; and
receive a first packet that is sent by the LPU through the second transmission channel, where the first packet belongs to the operation and maintenance task type packet, and the device information is included in the first packet.

In a possible implementation, the first MPU is connected to the second MPU through a third transmission channel, the second packet belongs to a configuration management type packet, and the second MPU is configured to:
obtain, through the third transmission channel, an entry synchronized by the first MPU; and
send the entry to the LPU through the second transmission channel, where the entry is included in the second packet, and the entry is a routing entry or a forwarding entry.

In a possible implementation, the second MPU is further configured to:
when the first MPU is in a failed state, send both a packet belonging to the service flow packet and a packet belonging to the non-service flow packet to the LPU through the second transmission channel.

In a possible implementation, the first MPU is further configured to:
when the second MPU is in a failed state, send both a packet belonging to the service flow packet and a packet belonging to the non-service flow packet to the LPU through the first transmission channel.

In a possible implementation, the non-service flow packet includes one or more of an operation and maintenance task type packet, a configuration management type packet, or a packet of an unknown type.

The operation and maintenance task type packet includes a gRPC packet, an ssh packet, and an snmp packet.

The configuration management type packet includes a packet carried by an entry delivery task, an entry configuration task, an entry deletion task, and an entry reconciliation task.

In a possible implementation, the first MPU is a primary MPU, and the second MPU is a secondary MPU.

In a possible implementation, the service flow packet includes a BGP packet, an OSPF packet, an IS-IS packet, and a RIP packet.

In a possible implementation, the second MPU is further connected to an NCE.

## Claims

1. A packet transmission method, wherein the method is applied to a frame-shaped communication device, the frame-shaped communication device comprises a first main processing unit (MPU), a second MPU, and a line processing unit (LPU), the first MPU is connected to the LPU through a first transmission channel, the second MPU is connected to the LPU through a second transmission channel, and the method comprises:
determining, by the LPU, a type of a to-be-transmitted first packet; and
if the first packet belongs to a service flow packet, sending, by the LPU, the first packet to the first MPU through the first transmission channel; or
if the first packet belongs to a non-service flow packet, sending, by the LPU, the first packet to the second MPU through the second transmission channel.

2. The method according to claim 1, wherein the non-service flow packet comprises one or more of an operation and maintenance task type packet, a configuration management type packet, or a packet of an unknown type;
the operation and maintenance task type packet comprises a Google remote procedure call (gRPC) packet, a secure shell (ssli) packet, and a simple network management protocol (snmp) packet; and
the configuration management type packet comprises a packet carried by an entry delivery task, an entry configuration task, an entry deletion task, and an entry reconciliation task.

3. The method according to claim 2, wherein after the sending, by the LPU, the first packet to the second MPU through the second transmission channel, the method further comprises:
determining, by the second MPU, that the first packet belongs to the packet of the unknown type, and performing discarding or rate limiting processing on the first packet.

4. The method according to claim 2, wherein the first packet belongs to the operation and maintenance task type packet, and before the sending, by the LPU, the first packet to the second MPU through the second transmission channel, the method further comprises:
receiving, by the LPU, a second packet from the second MPU through the second transmission channel, wherein the second packet belongs to the operation and maintenance task type packet, and the second packet comprises a device information collection indication; and
collecting, by the LPU, device information of the frame-shaped communication device based on the device information collection indication; and
the sending, by the LPU, the first packet to the second MPU through the second transmission channel comprises:
sending, by the LPU, the device information to the second MPU through the second transmission channel, wherein the device information is comprised in the first packet.

5. The method according to any one of claims 1 to 4, wherein the first MPU is a primary MPU, and the second MPU is a secondary MPU.

6. The method according to any one of claims 1 to 5, wherein the method further comprises:
when the first MPU is in a failed state, sending, by the LPU, both a packet belonging to the service flow packet and a packet belonging to the non-service flow packet to the second MPU through the second transmission channel.

7. The method according to any one of claims 1 to 6, wherein the method further comprises:
when the second MPU is in a failed state, sending, by the LPU, both a packet belonging to the service flow packet and a packet belonging to the non-service flow packet to the first MPU through the first transmission channel.

8. The method according to any one of claims 1 to 7, wherein the service flow packet comprises a border gateway protocol BGP packet, an open shortest path first (OSPF) packet, an intermediate system to intermediate system (IS-IS) packet, and a routing information protocol (RIP) packet.

9. A packet transmission method, wherein the method is applied to a frame-shaped communication device, the frame-shaped communication device comprises a first main processing unit (MPU), a second MPU, and a line processing unit (LPU), the first MPU is connected to the LPU through a first transmission channel, the second MPU is connected to the LPU through a second transmission channel, the first transmission channel is used to transmit a service flow packet between the LPU and the first MPU, and the method comprises:
sending, by the second MPU, a second packet to the LPU through the second transmission channel, wherein the second packet belongs to a non-service flow packet.

10. The method according to claim 9, wherein the non-service flow packet comprises one or more of an operation and maintenance task type packet, a configuration management type packet, or a packet of an unknown type;
the operation and maintenance task type packet comprises a Google remote procedure call (gRPC) packet, a secure shell (ssh) packet, and a simple network management protocol (snmp) packet; and
the configuration management type packet comprises a packet carried by an entry delivery task, an entry configuration task, an entry deletion task, and an entry reconciliation task.

11. The method according to claim 10, wherein the method further comprises:
performing, by the second MPU, discarding or rate limiting processing on a first packet that is received from the LPU through the second transmission channel, wherein the first packet belongs to the packet of the unknown type.

12. The method according to claim 10, wherein the second packet belongs to the operation and maintenance task type packet, and the sending, by the second MPU, a second packet to the LPU through the second transmission channel comprises:
sending, by the second MPU, a device information collection indication to the LPU through the second transmission channel, wherein the device information collection indication is comprised in the second packet, and the device information collection indication is used to indicate the LPU to collect device information of the frame-shaped communication device; and
after the second MPU sends a non-service flow packet to the LPU through the second transmission channel, the method further comprises:
receiving, by the second MPU, a first packet that is sent by the LPU through the second transmission channel, wherein the first packet belongs to the operation and maintenance task type packet, and the device information is comprised in the first packet.

13. The method according to claim 10, wherein the first MPU is connected to the second MPU through a third transmission channel, the second packet belongs to the configuration management type packet, and before the sending, by the second MPU, a second packet to the LPU through the second transmission channel, the method further comprises:
obtaining, by the second MPU through the third transmission channel, an entry synchronized by the first MPU; and
the sending, by the second MPU, a second packet to the LPU through the second transmission channel comprises:
sending, by the second MPU, the entry to the LPU through the second transmission channel, wherein the entry is comprised in the second packet, and the entry is a routing entry or a forwarding entry.

14. The method according to any one of claims 9 to 13, wherein the first MPU is a primary MPU, and the second MPU is a secondary MPU.

15. The method according to any one of claims 9 to 14, wherein the method further comprises:
when the first MPU is in a failed state, sending, by the second MPU, both a packet belonging to the service flow packet and a packet belonging to the non-service flow packet to the LPU through the second transmission channel.

16. The method according to any one of claims 9 to 15, wherein the method further comprises:
when the second MPU is in a failed state, sending, by the first MPU, both a packet belonging to the service flow packet and a packet belonging to the non-service flow packet to the LPU through the first transmission channel.

17. The method according to any one of claims 9 to 16, wherein the service flow packet comprises a border gateway protocol (BGP) packet, an open shortest path first (OSPF) packet, an intermediate system to intermediate system IS-IS packet, and a routing information protocol (RIP) packet.

18. A frame-shaped communication device, wherein the frame-shaped communication device comprises a first main processing unit (MPU), a second MPU, and a line processing unit (LPU), the first MPU is connected to the LPU through a first transmission channel, and the second MPU is connected to the LPU through a second transmission channel; and
the LPU is configured to:
determine a type of a to-be-transmitted first packet; and
if the first packet belongs to a service flow packet, send the first packet to the first MPU through the first transmission channel; or
if the first packet belongs to a non-service flow packet, send the first packet to the second MPU through the second transmission channel.

19. The frame-shaped communication device according to claim 18, wherein the second MPU is configured to:
determine that the received first packet belongs to a packet of an unknown type, and perform discarding or rate limiting processing on the first packet.

20. The frame-shaped communication device according to claim 18, wherein the first packet belongs to an operation and maintenance task type packet, and the LPU is further configured to:
receive a second packet from the second MPU through the second transmission channel, wherein the second packet belongs to the operation and maintenance task type packet, and the second packet comprises a device information collection indication;
collect device information of the frame-shaped communication device based on the device information collection indication; and
send the device information to the second MPU through the second transmission channel, wherein the device information is comprised in the first packet.

21. The frame-shaped communication device according to any one of claims 18 to 20, wherein the LPU is further configured to:
when the first MPU is in a failed state, send both a packet belonging to the service flow packet and a packet belonging to the non-service flow packet to the second MPU through the second transmission channel.

22. The frame-shaped communication device according to any one of claims 18 to 20, wherein the LPU is further configured to:
when the second MPU is in a failed state, send both a packet belonging to the service flow packet and a packet belonging to the non-service flow packet to the first MPU through the first transmission channel.

23. A frame-shaped communication device, wherein the frame-shaped communication device comprises a first main processing unit (MPU), a second MPU, and a line processing unit (LPU), the first MPU is connected to the LPU through a first transmission channel, the second MPU is connected to the LPU through a second transmission channel, and the first transmission channel is used to transmit a service flow packet between the LPU and the first MPU; and
the second MPU is configured to:
send a second packet to the LPU through the second transmission channel, wherein the second packet belongs to a non-service flow packet.

24. The frame-shaped communication device according to claim 23, wherein the second MPU is further configured to:
perform discarding or rate limiting processing on a first packet that is received from the LPU through the second transmission channel, wherein the first packet belongs to a packet of an unknown type.

25. The frame-shaped communication device according to claim 23, wherein the second packet belongs to an operation and maintenance task type packet, and the second MPU is configured to:
send a device information collection indication to the LPU through the second transmission channel, wherein the device information collection indication is comprised in the second packet, and the device collection information indication is used to indicate the LPU to collect device information of the frame-shaped communication device; and
receive a first packet that is sent by the LPU through the second transmission channel, wherein the first packet belongs to the operation and maintenance task type packet, and the device information is comprised in the first packet.

26. The frame-shaped communication device according to claim 23, wherein the first MPU is connected to the second MPU through a third transmission channel, the second packet belongs to a configuration management type packet, and the second MPU is configured to:
obtain, through the third transmission channel, an entry synchronized by the first MPU; and
send the entry to the LPU through the second transmission channel, wherein the entry is comprised in the second packet, and the entry is a routing entry or a forwarding entry.

27. The frame-shaped communication device according to any one of claims 23 to 26, wherein the second MPU is further configured to:
when the first MPU is in a failed state, send both a packet belonging to the service flow packet and a packet belonging to the non-service flow packet to the LPU through the second transmission channel.

28. The frame-shaped communication device according to any one of claims 23 to 26, wherein the first MPU is configured to:
when the second MPU is in a failed state, send both a packet belonging to the service flow packet and a packet belonging to the non-service flow packet to the LPU through the first transmission channel.
